# FASCICULE DE BREVET EUROPEEN

(11) **EP 2 775 221 B1**
(45) Date de publication et mention de la délivrance du brevet: **05.09.2018**
(21) Numéro de dépôt: 14158248.6
(22) Date de dépôt: 07.03.2014
(51) Int. Cl.: F24D 17/00, F04D 15/00, F24D 19/10

(54) **Régulation en débit et en température d'un circulateur d'eau chaude sanitaire**
Durchlauf- und Temperaturregulierung eines Durchlauferhitzers zur Warmwassererzeugung
Regulation of the flow and temperature of a sanitary hot water circulator

(30) Priorité: 08.03.2013 FR 1352125
(43) Date de publication de la demande: 10.09.2014
(73) Titulaire: Pompes Salmson, 78400 Chatou (FR)
(72) Inventeur: Guillet, Donald, 53960 Bonchamp Les Laval (FR); Hinard, Julien, 53000 Laval (FR); Loi Le Carreres, Giovanna, 35000 Rennes (FR)
(74) Mandataire: Hirsch & Associés

(56) Documents cités:
- EP-A1- 1 342 957
- EP-A1- 1 619 446
- EP-A1- 2 413 047
- EP-A1- 2 492 601
- DE-A1- 19 718 469
- DE-B3-102011 056 865
- US-A1- 2010 089 339

## Description

La présente invention concerne un procédé de régulation d'un circulateur d'eau chaude sanitaire, un circulateur adapté à la mise en oeuvre de ce procédé et une installation d'eau chaude sanitaire comprenant un tel circulateur.

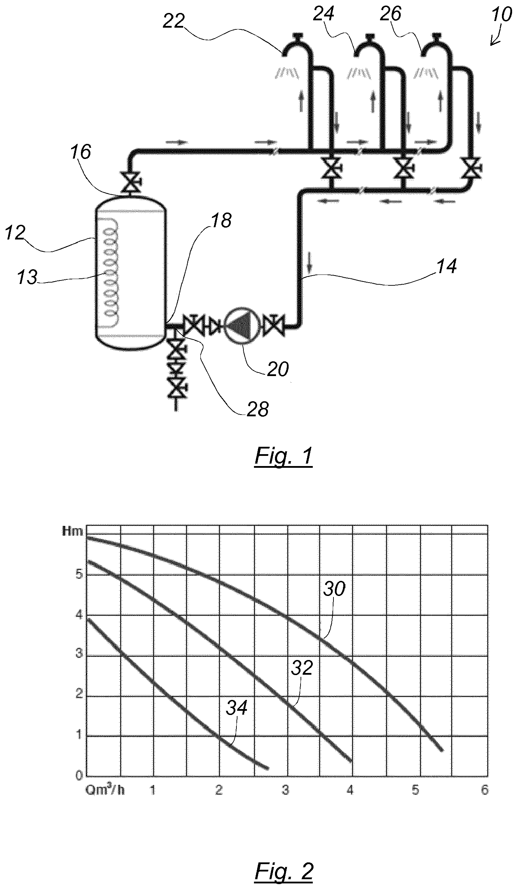

La figure 1 représente une installation d'eau chaude sanitaire connue 10. Cette installation comprend un réservoir 12 adapté à chauffer l'eau qu'il contient - ici le réservoir 12 est muni d'une résistance électrique 13 - et un circuit d'eau chaude sanitaire 14 qui met en relation de fluide une sortie 16 du réservoir 12 avec une entrée 18 du réservoir 12. Un circulateur d'eau chaude sanitaire 20 - ou circulateur pour eau chaude sanitaire - permet la mise en mouvement de l'eau chaude sanitaire dans le circuit d'eau chaude sanitaire 14, depuis la sortie 16 du réservoir 12 vers l'entrée 18 du réservoir 12 (comme illustré par les flèches représentées sur la fig. 1). Des points de puisage - en l'espace trois points de puisage 22, 24, 26 - sont ménagés sur le circuit d'eau chaude sanitaire 14. Ces points de puisage 22, 24, 26 sont disposés en parallèle les uns des autres. Les points de puisage peuvent notamment être un robinet, une douche ou tout appareil utilisant de l'eau chaude sanitaire. Pour compenser les pertes d'eau chaude sanitaire du fait du puisage, le circuit d'eau chaude sanitaire 14 est alimenté en eau à chauffer dans le réservoir 12 par de l'eau de ville (ou tout autre source imaginable), qui entre dans le circuit d'eau chaude sanitaire 14 au niveau d'une entrée d'eau 28 du circuit d'eau chaude sanitaire 14. En l'espèce, l'entrée d'eau de ville 28 est située entre le circulateur d'eau chaude sanitaire 20 et l'entrée 18 du réservoir 12.

Dans une telle installation d'eau chaude sanitaire 10, le circulateur d'eau chaude sanitaire 20 a pour fonction de faire circuler l'eau chaude sanitaire en permanence afin de maintenir celle-ci à une température minimale dans tout le circuit d'eau chaude sanitaire 14. Ceci permet d'avoir de l'eau chaude disponible en permanence et de façon instantanée au niveau des points de puisages 22, 24, 26, notamment, dès l'ouverture d'un robinet. Classiquement, la variation de température entre la sortie du réservoir d'eau chaude sanitaire et l'entrée d'eau chaude sanitaire est de l'ordre de 5°C, la température de l'eau chaude sanitaire en sortie du réservoir étant comprise entre 55 et 60°C.

Il est connu que plus le débit dans l'installation d'eau chaude sanitaire est élevé, plus la variation de température de l'eau chaude sanitaire dans le circuit d'eau chaude sanitaire est faible. Cependant, un débit élevé engendre une consommation élevée d'énergie par le circulateur, plus de pertes calorifiques dans l'installation d'eau chaude sanitaire ainsi que des risques de bruit plus important.

Par conséquent, il est connu de régler le fonctionnement du circulateur d'eau chaude sanitaire pour limiter la variation de température de l'eau chaude sanitaire dans le circuit d'eau chaude sanitaire tout en limitant la consommation énergétique du circulateur.

Or, les circulateurs d'eau chaude sanitaire sont traditionnellement adaptés à fonctionner selon différentes courbes hydrauliques prédéterminées, telles que les courbes 30, 32, 34 illustrées sur la figure 2. Chacune des courbes hydrauliques 30, 32, 34 correspond à un réglage du circulateur. Ces courbes hydrauliques 30, 32, 34 indiquent, chacune pour un réglage du circulateur, l'ensemble des points de fonctionnement pression-débit du circulateur, le débit fourni par le circulateur variant en fonction de la perte de charge dans le circuit d'eau chaude sanitaire, notamment en cas de puisage d'eau chaude sanitaire.

Ainsi, traditionnellement, un installateur d'un circulateur d'eau chaude sanitaire dans une installation d'eau chaude sanitaire choisit la courbe hydraulique la plus adaptée pour s'assurer que la variation de température dans l'installation est satisfaisante, tout en limitant la consommation énergétique du circulateur. Le choix de la courbe hydraulique selon laquelle le circulateur d'eau chaude sanitaire est réglé, est à réaliser pour chaque installation.

Pour réaliser ce choix, il est tout d'abord déterminé le débit permettant de maintenir la variation de température dans le circuit d'eau chaude sanitaire inférieure à une valeur souhaitée en absence de tout puisage d'eau chaude sanitaire dans le circuit d'eau chaude sanitaire.

Un autre critère peut être pris en compte. Il s'agit d'un débit minimum dans l'installation d'eau chaude sanitaire qui évite la stagnation de l'eau dans certaines parties du circuit d'eau chaude sanitaire. En effet, la stagnation de l'eau est propice au développement de bactéries telles la légionnelle.

L'installateur retient le plus grand des deux débits précédents (pour maintenir la variation de température dans le circuit inférieure à une valeur souhaitée, et le débit minimum évitant la stagnation de l'eau chaude sanitaire dans le circuit d'eau chaude sanitaire) comme débit à régler dans l'installation d'eau chaude sanitaire.

Après avoir déterminé le débit, il est déterminé les pertes de charges de l'installation d'eau chaude sanitaire, ceci afin d'en déduire la pression que le circulateur doit fournir.

À partir de cet unique point de fonctionnement déterminé du circulateur, l'installateur choisit la courbe hydraulique du circulateur la plus appropriée et sélectionne le réglage correspondant sur le circulateur. En absence de puisage d'eau, le circulateur fonctionne toujours au point de fonctionnement déterminé par la méthode décrite ci-dessus.

Cependant, ce mode de fonctionnement d'un circulateur dans une installation d'eau chaude sanitaire est assez complexe à régler à l'installation du circulateur. En outre, comme indiqué, ce mode de fonctionnement ne permet pas de s'assurer que la variation de température de l'eau chaude sanitaire dans l'installation d'eau chaude sanitaire est maintenue à un niveau satisfaisant en toute situation. Ainsi, ce mode de fonctionnement ne permet pas d'assurer une température minimum dans le circuit d'eau chaude sanitaire. Le document DE10 2011 056 865 B3 divulgue un procédé de régulation d'un moteur d'un circulateur d'eau sanitaire, le procédé comportant: choix d'un seuil de débit minimal; détermination d'un débit d'eau chaude sanitaire du circulateur; mesure d'une température d'eau chaude sanitaire du circulateur; régulation d'une vitesse de rotation du moteur en fonction du seuil de débit minimal, du débit déterminé et de la température mesurée. Le but de la présente invention est de proposer un procédé de régulation ne présentant pas les inconvénients susmentionnés.

Pour se faire, l'invention propose un procédé de régulation d'un circulateur (20) d'eau chaude sanitaire selon la revendication 1. Le procédé de régulation selon l'invention présente en particulier les caractéristiques suivantes:
- la vitesse du circulateur est régulée en fonction d'une température d'eau chaude sanitaire et, quand le débit d'eau chaude sanitaire résultant de la modification de la vitesse du circulateur devient inférieur à une valeur de seuil, la vitesse du circulateur est augmentée pour maintenir le débit d'eau chaude sanitaire supérieur ou égal à la valeur de seuil ; et
- la vitesse du circulateur est augmentée quand la température d'eau chaude sanitaire devient inférieure à une valeur de seuil et dans lequel la vitesse du circulateur est diminuée quand la température d'eau chaude sanitaire devient supérieure à la valeur de seuil.

L'invention se rapporte également à un circulateur d'eau chaude sanitaire comprenant des moyens de régulation du circulateur adaptés à mettre en oeuvre le procédé tel que décrit ci-avant dans toutes ses combinaisons.

Le circulateur comprend des moyens de détermination d'une température d'eau chaude sanitaire.

Les moyens de détermination d'une température d'eau chaude sanitaire peuvent comprendre un capteur de température dans le circulateur.

Les moyens de détermination d'une température d'eau chaude sanitaire peuvent comprendre une interface pour recevoir une information de température d'eau chaude sanitaire d'un capteur à l'extérieur du circulateur.

Le circulateur comprend des moyens de détermination du débit du circulateur.

Les moyens de détermination du débit du circulateur peuvent comprendre des moyens de détermination de la vitesse de rotation du moteur du circulateur et des moyens de détermination de la puissance consommée par le moteur.

Les moyens de détermination du débit peuvent comprendre une interface pour recevoir une information de débit d'un capteur à l'extérieur du circulateur.

Selon un autre aspect, l'invention se rapporte à une installation d'eau chaude sanitaire comprenant un réservoir adapté à chauffer l'eau contenue dans le réservoir, un circuit qui met en communication de fluide une sortie du réservoir avec une entrée du réservoir et qui comporte au moins un point de puisage d'eau chaude sanitaire, et un circulateur tel que décrit ci-avant dans toutes ses combinaisons, pour mettre en mouvement l'eau depuis la sortie du réservoir vers l'entrée du réservoir.

La vitesse du circulateur est en fonction d'une température d'eau chaude sanitaire au voisinage de l'entrée du réservoir et d'une valeur de seuil d'un débit d'eau chaude sanitaire.

D'autres caractéristiques et avantages de l'invention apparaîtront à la lecture de la description qui suit de modes de réalisation préférés de l'invention, donnée à titre d'exemple et en référence aux dessins annexés, qui montrent :
- Figure 1, un exemple d'installation d'eau chaude sanitaire,
- Figure 2, des exemples de courbes hydrauliques d'un circulateur d'eau chaude sanitaire connu,
- Figure 3, des exemples de points de fonctionnement d'un circulateur régulé selon un procédé de régulation selon l'invention.

Dans la suite de la description, les éléments identiques ou de fonction identique aux éléments de la figure 2 portent le même signe de référence.

L'invention se rapporte à un procédé de régulation d'un circulateur d'eau chaude sanitaire 20 dans lequel la vitesse du circulateur d'eau chaude sanitaire 20 est modifiée en fonction d'une température d'eau chaude sanitaire et d'une valeur de seuil de débit d'eau chaude sanitaire.

Ce procédé de régulation est par exemple mis en oeuvre en cas d'attente de puisages sur le circuit d'eau chaude sanitaire dans lequel le circulateur est mis en oeuvre (c'est-à-dire en circuit d'eau chaude sanitaire fermé). Le procédé permet alors d'assurer une température minimum dans le circuit d'eau chaude sanitaire, indépendamment des conditions autour du circuit d'eau chaude sanitaire, et une consommation d'énergie maîtrisée. En outre, la valeur de seuil du débit peut être choisie de telle sorte que le procédé de régulation évite tout risque de stagnation dans le circuit d'eau chaude sanitaire. Le procédé de régulation permet alors d'assurer un meilleur niveau d'hygiène.

Il est à noter ici que le procédé selon l'invention vise à réguler la vitesse du circulateur - c'est-à-dire la vitesse de rotation de son moteur. En effet, le débit du circulateur dépend directement de la vitesse de rotation du moteur de celui-ci de sorte qu'une augmentation de la vitesse du moteur, pour une même perte de charge dans le circuit d'eau chaude sanitaire, induit une augmentation du débit d'eau chaude sanitaire, une diminution de la vitesse se traduisant par une diminution du débit d'eau chaude sanitaire. Ainsi, en régulant la vitesse de rotation du circulateur, on régule son débit.

Selon ce procédé, la vitesse du circulateur est augmentée quand la température d'eau chaude sanitaire devient inférieure à une valeur de seuil (moins une éventuelle marge) et dans lequel la vitesse du circulateur est diminuée quand la température d'eau chaude sanitaire devient supérieure à la valeur de seuil (plus une éventuelle marge). En outre, la vitesse du circulateur est régulée pour assurer un débit d'eau chaude sanitaire supérieur à la valeur de seuil.

Le circulateur d'eau chaude sanitaire peut être mis en oeuvre dans une installation d'eau chaude sanitaire 10 telle qu'illustrée sur la figure 1 et décrite ci-avant.

Dans ce cas, la régulation du circulateur d'eau chaude sanitaire 20 peut être réalisée en fonction d'une température d'eau chaude sanitaire dans le circuit d'eau chaude sanitaire, au voisinage de l'entrée 18 du réservoir 12. La température peut être mesurée par un capteur de température disposé dans le circuit d'eau chaude sanitaire, au voisinage de l'entrée 18 du réservoir 12. Ce capteur de température peut être compris dans le circulateur d'eau chaude sanitaire 20. Dans ce cas, il est intéressant de disposer le circulateur d'eau chaude sanitaire 20 au voisinage de l'entrée 18 du réservoir 12. Ceci permet en effet de déterminer une température d'eau chaude sanitaire en un point éloigné de la sortie 16 du réservoir 12. Cette température permet ainsi de déterminer - ou tout du moins est représentative de - la variation de température sur l'intégralité du circuit d'eau chaude sanitaire 20.

En variante, le capteur de température est déporté à l'extérieur du circulateur d'eau chaude sanitaire. Ceci permet notamment de placer le circulateur d'eau chaude sanitaire 20 à tout endroit du circuit d'eau chaude sanitaire 14, par exemple au voisinage de la sortie 16 du réservoir 12 tout en mesurant une température d'eau chaude sanitaire au voisinage de l'entrée 18 du réservoir 12. Dans ce cas, le circulateur comprend une interface pour recevoir une information de température d'eau chaude sanitaire du capteur disposé à l'extérieur du circulateur 20.

Avec un tel circulateur d'eau chaude sanitaire 20, un installateur - voire tout utilisateur - règle une température minimum souhaitée et la vitesse du circulateur d'eau chaude sanitaire 20 est régulée pour assurer que la température minimum souhaitée est toujours atteinte. Typiquement, la température minimum réglée est de l'ordre de 5°C en dessous de la température de l'eau chaude sanitaire au niveau de la sortie 16 du réservoir 12, laquelle est classiquement comprise entre 55 et 60 °C.

Une telle installation 10 munie du circulateur 20 permet de maintenir une température minimum de l'eau chaude sanitaire dans le circuit 14 quelles que soient les conditions ambiantes de température. En outre, son installation est aisée, puisque le seul réglage à réaliser est celui de la température minimum.

La vitesse du circulateur 20 est en outre régulée en fonction d'un débit minimum à assurer dans le circuit d'eau chaude sanitaire 14. En d'autres termes, quand le débit, régulé en fonction de la température d'eau chaude sanitaire, devient inférieur à une valeur de seuil Qₘᵢₙ, le débit est maintenu supérieur ou égal à cette valeur de seuil Qₘᵢₙ en régulant la vitesse de rotation du circulateur d'eau chaude sanitaire. Il est à noter que, dans ce cas, la température mesurée d'eau chaude sanitaire est a priori supérieure à la valeur minimum.

À titre d'exemple, la valeur de seuil Qₘᵢₙ peut être choisie égale à la valeur limite assurant un régime turbulent de l'écoulement de l'eau chaude sanitaire dans le circuit d'eau chaude sanitaire. Ceci permet en effet, alors, d'empêcher la stagnation d'eau chaude sanitaire dans certains endroits, au moins, du circuit d'eau chaude sanitaire, stagnation qui est propice au développement de bactéries. La valeur de seuil Qₘᵢₙ peut, dans ce cas être choisie égale à 0,4 m³/h pour un diamètre nominal égal à 25 mm des conduits formant le circuit d'eau chaude sanitaire. La valeur de seuil de débit d'eau chaude sanitaire peut être choisie en fonction d'autres critères que le débit minimum d'eau chaude sanitaire permettant d'évité la stagnation d'eau chaude sanitaire dans l'installation d'eau chaude sanitaire.

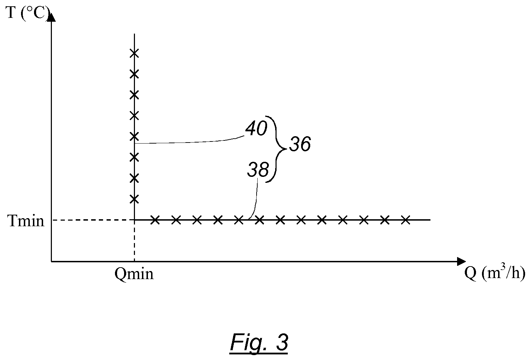

En référence à la figure 3, la loi de régulation 36 vise à réguler le fonctionnement du circulateur d'eau chaude sanitaire 20 selon deux tronçons interdépendants dans un diagramme de la température d'eau chaude sanitaire T mesurée en fonction du débit Q :
- un premier tronçon horizontal 38, lequel indique que tant que le débit est supérieur à une valeur de seuil Qₘᵢₙ le circulateur 20 est régulé pour maintenir la température mesurée à une valeur de seuil Tₘᵢₙ ;
- un deuxième tronçon vertical 40, lequel indique que lorsque le débit régulé en fonction de la température d'eau chaude sanitaire devient inférieur à la valeur de seuil Qₘᵢₙ (c'est-à-dire qu'un débit inférieur à la valeur de seuil Qₘᵢₙ permet de maintenir la température d'eau chaude sanitaire à la valeur de seuil Tₘᵢₙ), alors la vitesse du circulateur 20 est régulée pour maintenir le débit à une valeur supérieure ou égale à la valeur de seuil Qₘᵢₙ.

Le débit de l'eau chaude sanitaire peut être déterminé dans le circulateur, en fonction de la vitesse de rotation du moteur du circulateur et de la puissance consommée par le moteur. En variante, le débit d'eau chaude sanitaire peut être mesuré en tout point du circuit d'eau chaude sanitaire, au moyen d'un débitmètre. Dans ce cas, le circulateur comprend une interface permettant de recevoir une information de débit du débitmètre disposé à l'extérieur du circulateur.

Bien entendu, la présente invention ne se limite pas aux exemples décrits ci-dessus et est susceptible de nombreuses variantes accessibles à l'homme de l'art.

## Revendications

1. Procédé de régulation d'un moteur d'un circulateur (20) d'eau chaude sanitaire, le procédé comportant les étapes suivantes:
- choix d'un seuil de débit minimal (Qₘᵢₙ) d'eau chaude sanitaire du circulateur,
- détermination d'un débit (Q) d'eau chaude sanitaire du circulateur,
- réglage d'un seuil de température minimale (Tₘᵢₙ) d'eau chaude sanitaire du circulateur,
- mesure d'une température (T) d'eau chaude sanitaire du circulateur,
- régulation d'une vitesse de rotation du moteur en fonction du seuil de débit minimal (Qₘᵢₙ), du débit déterminé (Q), du seuil de température minimale (Tₘᵢₙ) et de la température mesurée (T), ladite régulation de vitesse consistant à
- quand la température mesurée (T) est inférieure au seuil de température minimale (Tₘᵢₙ), augmenter la vitesse de rotation dudit moteur, et quand ladite température mesurée (T) est supérieure audit seuil de température minimale (Tₘᵢₙ), diminuer la vitesse de rotation dudit moteur ;
- quand le débit déterminé (Q) est inférieur au seuil de débit minimal (Qₘᵢₙ), augmenter la vitesse de rotation dudit moteur pour maintenir le débit d'eau chaude sanitaire supérieur ou égal au niveau seuil et donc éviter la stagnation d'eau chaude sanitaire.

2. Circulateur (20) d'eau chaude sanitaire adapté à mettre en oeuvre le procédé selon la revendication 1, ledit circulateur comprenant
- un moteur,
- des moyens de choix d'un seuil de débit minimal (Qₘᵢₙ) d'eau chaude sanitaire du circulateur,
- des moyens de détermination du débit (Q) d'eau chaude sanitaire du circulateur,
- des moyens de réglage d'un seuil de température minimale (Tₘᵢₙ) d'eau chaude sanitaire du circulateur,
- des moyens de mesure d'une température (T) d'eau chaude sanitaire du circulateur, et
- des moyens de régulation de la vitesse de rotation dudit moteur en fonction dudit seuil de débit minimal (Qₘᵢₙ), dudit débit déterminé (Q), dudit seuil de température minimale (Tₘᵢₙ) et de ladite température mesurée (T), ladite régulation de vitesse consistant à
- quand la température mesurée (T) est inférieure au seuil de température minimale (Tₘᵢₙ), augmenter la vitesse de rotation dudit moteur, et quand ladite température mesurée (T) est supérieure audit seuil de température minimale (Tₘᵢₙ), diminuer la vitesse de rotation dudit moteur ;
- quand le débit déterminé (Q) est inférieur au seuil de débit minimal (Qₘᵢₙ), augmenter la vitesse de rotation dudit moteur pour maintenir le débit d'eau chaude sanitaire supérieur ou égale à la valeur de seuil et donc éviter la stagnation de l'eau chaude sanitaire.

3. Circulateur (20) selon la revendication 2, dans lequel les moyens de mesure d'une température (T) d'eau chaude sanitaire du circulateur comprennent un capteur de température dans le circulateur (20).

4. Circulateur (20) selon la revendication 2, dans lequel les moyens de mesure d'une température (T) d'eau chaude sanitaire du circulateur comprennent une interface pour recevoir une information de température d'eau chaude sanitaire d'un capteur à l'extérieur du circulateur (20).

5. Circulateur (20) selon l'une quelconque des revendications 2 à 4, dans lequel les moyens de détermination du débit (Q) d'eau chaude sanitaire du circulateur comprennent des moyens de détermination de la vitesse de rotation du moteur du circulateur et des moyens de détermination de la puissance consommée par le moteur.

6. Circulateur (20) selon l'une quelconque des revendications 2 à 4, dans lequel les moyens de détermination du débit (Q) d'eau chaude sanitaire du circulateur comprennent une interface pour recevoir une information de débit d'eau chaude sanitaire du circulateur de la part d'un capteur à l'extérieur du circulateur.

7. Installation d'eau chaude sanitaire (10) comprenant
- un réservoir (12) adapté à chauffer l'eau contenue en son sein,
- un circuit (14) qui met en communication de fluide une sortie (16) du réservoir (12) avec une entrée (18) du réservoir (12) et qui comporte au moins un point de puisage (22, 24, 26) d'eau chaude sanitaire, et
- un circulateur (20) selon l'une quelconque des revendications 2 à 6, ledit circulateur mettant en mouvement l'eau chaude sanitaire depuis la sortie (16) du réservoir (12) vers l'entrée (18) du réservoir (12), les moyens de mesure d'une température (T) d'eau chaude sanitaire du circulateur étant disposés sur ledit circuit, au voisinage de ladite entrée.

## Patentansprüche

1. Verfahren zur Regelung eines Motors einer Warmwasserumwälzpumpe (20), wobei das Verfahren die folgenden Schritte umfasst:
- Auswahl einer minimalen Warmwasserdurchsatzgrenze (Qₘᵢₙ) von der Umwälzpumpe,
- Bestimmung eines Warmwasserdurchsatzes (Q) der Umwälzpumpe,
- Einstellung einer minimalen Warmwassertemperaturgrenze (Tₘᵢₙ) der Umwälzpumpe,
- Messen einer Warmwassertemperatur (T) der Umwälzpumpe,
- Regelung einer Rotationsgeschwindigkeit des Motors in Abhängigkeit von der minimalen Durchsatzgrenze (Qₘᵢₙ), dem bestimmten Durchsatz (Q), der minimalen Temperaturgrenze (Tₘᵢₙ) und der gemessenen Temperatur (T), wobei die Geschwindigkeitsregelung darin besteht:
- wenn die gemessene Temperatur (T) niedriger als die minimale Temperaturgrenze (Tₘᵢₙ) ist, Erhöhung der Rotationsgeschwindigkeit des Motors, und wenn die gemessene Temperatur (T) höher als die minimale Temperaturgrenze (Tₘᵢₙ) ist, Verringerung der Rotationsgeschwindigkeit des Motors;
- wenn der bestimmte Durchsatz (Q) geringer als die minimale Durchsatzgrenze (Qₘᵢₙ) ist, Erhöhung der Rotationsgeschwindigkeit des Motors, um den Warmwasserdurchsatz höher oder gleich dem Grenzniveau zu halten und somit das Stagnieren von Warmwasser zu vermeiden.

2. Warmwasserumwälzpumpe (20), die geeignet ist, das Verfahren nach Anspruch 1 einzusetzen, wobei die Umwälzpumpe umfasst:
- einen Motor,
- Mittel zur Auswahl einer minimalen Warmwasserdurchsatzgrenze (Qₘᵢₙ) der Umwälzpumpe,
- Mittel zur Bestimmung des Warmwasserdurchsatzes (Q) der Umwälzpumpe,
- Mittel zur Einstellung einer minimalen Warmwassertemperaturgrenze (Tₘᵢₙ) der Umwälzpumpe,
- Mittel zum Messen einer Warmwassertemperatur (T) der Umwälzpumpe, und
- Mittel zur Regelung einer Rotationsgeschwindigkeit des Motors in Abhängigkeit von der minimalen Durchsatzgrenze (Qₘᵢₙ), dem bestimmten Durchsatz (Q), der minimalen Temperaturgrenze (Tₘᵢₙ) und der gemessenen Temperatur (T), wobei die Geschwindigkeitsregelung darin besteht:
- wenn die gemessene Temperatur (T) niedriger als die minimale Temperaturgrenze (Tₘᵢₙ) ist, Erhöhung der Rotationsgeschwindigkeit des Motors, und wenn die gemessene Temperatur (T) höher als die minimale Temperaturgrenze (Tₘᵢₙ) ist, Verringerung der Rotationsgeschwindigkeit des Motors;
- wenn der bestimmte Durchsatz (Q) geringer als die minimale Durchsatzgrenze (Qₘᵢₙ) ist, Erhöhung der Rotationsgeschwindigkeit des Motors, um den Warmwasserdurchsatz höher oder gleich dem Grenzniveau zu halten und somit das Stagnieren von Warmwasser zu vermeiden.

3. Umwälzpumpe (20) nach Anspruch 2, bei der die Mittel zum Messen einer Warmwassertemperatur (T) der Umwälzpumpe eine Schnittstelle umfassen, um eine Information zur Warmwassertemperatur von einem Fühler außerhalb der Umwälzpumpe (20) zu erhalten.

4. Umwälzpumpe (20) nach Anspruch 2, bei der die Mittel zum Messen einer Warmwassertemperatur (T) der Umwälzpumpe eine Schnittstelle umfassen, um eine Information zur Warmwassertemperatur von einem Fühler außerhalb der Umwälzpumpe (20) zu erhalten.

5. Umwälzpumpe (20) nach einem der Ansprüche 2 bis 4, bei der die Mittel zur Bestimmung des Warmwasserdurchsatzes (Q) der Umwälzpumpe Mittel zur Bestimmung der Rotationsgeschwindigkeit des Motors der Umwälzpumpe und Mittel zur Bestimmung der vom Motor verbrauchten Leistung umfassen.

6. Umwälzpumpe (20) nach einem der Ansprüche 2 bis 4, bei der die Mittel zur Bestimmung des Warmwasserdurchsatzes (Q) der Umwälzpumpe eine Schnittstelle umfassen, um eine Information zum Warmwasserdurchsatz von einem Fühler außerhalb der Umwälzpumpe zu erhalten.

7. Warmwasseranlage (10), umfassend:
- einen Behälter (12), der geeignet ist, das in seinem Inneren enthaltene Wasser zu erwärmen,
- eine Schaltung (14), die einen Ausgang (16) des Behälters (12) mit einem Eingang (18) des Behälters (12) in Fluidverbindung bringt, und die mindestens eine Entnahmestelle (22, 24, 26) von Warmwasser umfasst, und
- eine Umwälzpumpe (20) nach einem der Ansprüche 2 bis 6, wobei die Umwälzpumpe das Warmwasser vom Ausgang (16) des Behälters (12) zum Eingang (18) des Behälters (12) in Bewegung versetzt, wobei die Mittel zum Messen einer Warmwassertemperatur (T) der Umwälzpumpe auf der Schaltung in der Nähe des Eingangs angeordnet sind.

## Claims

1. Method for regulating a motor of a domestic hot water circulating pump (20), the method comprising the steps consisting of:
- selecting a minimum domestic hot water flow rate threshold (Qₘᵢₙ) of the circulating pump,
- determining a domestic hot water flow rate (Q) of the circulating pump,
- setting a minimum domestic hot water temperature threshold (Tₘᵢₙ) of the circulating pump,
- measuring a temperature (T) of the domestic hot water of the circulating pump,
- regulating a motor rotation speed as a function of the minimum flow rate threshold (Qₘᵢₙ), the determined flow rate (Q), the minimum temperature threshold (Tₘᵢₙ) and the measured temperature (T), said speed regulation consisting of:
- when the measured temperature (T) is below the minimum temperature threshold (Tₘᵢₙ), increasing the speed of rotation of said motor, and when said measured temperature (T) is greater than said minimum temperature threshold (Tₘᵢₙ), decreasing the speed of rotation of said motor;
- when the determined flow rate (Q) is below the minimum flow rate threshold (Qₘᵢₙ), increasing the speed of rotation of said motor to keep the flow rate of domestic hot water greater than or equal to said threshold value and thereby preventing stagnation of domestic hot water.

2. A circulating pump (20) for domestic hot water adapted to implement the method of claim 1, said circulating pump comprising
- a motor,
means for selecting a minimum flow rate threshold (Qₘᵢₙ) for the domestic hot water of the circulating pump,
means for determining the flow rate (Q) of the domestic hot water of the circulating pump,
means for setting a minimum temperature threshold (Tₘᵢₙ) for domestic hot water of the circulating pump,
means for measuring a temperature (T) of the domestic hot water of the circulating pump, and
means for regulating the speed of rotation of said motor as a function of said minimum flow rate threshold (Qₘᵢₙ), said determined flow rate (Q), said minimum temperature threshold (Tₘᵢₙ) and said measured temperature (T), said speed regulation consisting of
- when the measured temperature (T) is below the minimum temperature threshold (Tₘᵢₙ), increasing the speed of rotation of said motor, and when said measured temperature (T) is greater than said minimum temperature threshold (Tₘᵢₙ), decreasing the speed of rotation of said motor;
- when the determined flow rate (Q) is below the minimum flow rate threshold (Qₘᵢₙ), increasing the speed of rotation of said motor to keep the flow rate of domestic hot water greater than or equal to said threshold value and thereby preventing stagnation of domestic hot water.

3. The circulating pump (20) according to claim 2, wherein the means for measuring a domestic hot water temperature (T) of the circulating pump comprise a temperature sensor in the circulating pump (20).

4. The circulating pump (20) according to claim 2, wherein the means for measuring a domestic hot water temperature (T) of the circulating pump comprise an interface for receiving hot water temperature information from a sensor at the outside of the circulating pump (20).

5. The circulating pump (20) according to any one of claims 2 to 4, wherein the means for determining the domestic hot water flow rate (Q) of the circulating pump comprise means for determining the speed of rotation of the circulating pump motor and means for determining the power consumed by the motor.

6. The circulating pump (20) according to any one of claims 2 to 4, wherein the means for determining the domestic hot water flow rate (Q) of the circulating pump comprise an interface for receiving domestic hot water flow rate information for the circulating pump from a sensor external of the circulating pump.

7. A domestic hot water installation (10) comprising
- a storage tank (12) adapted to heat the water contained therein,
- a circuit (14) which puts an outlet (16) of the storage tank (12) in fluid communication with an inlet (18) of the storage tank (12) and which comprises at least one draw-off point (22, 24, 26) for domestic hot water, and
- a circulating pump (20) according to any one of claims 2 to 6, said circulating pump setting domestic hot water in motion from the outlet (16) of the tank (12) to the inlet (18) of the tank (12), the means for measuring a domestic hot water temperature (T) of the circulating pump being disposed in said circuit, in the vicinity of said inlet.
